# FASCICULE DE BREVET EUROPEEN

(11) **EP 3 510 477 B1**
(45) Date de publication et mention de la délivrance du brevet: **08.07.2020**
(21) Numéro de dépôt: 17768167.3
(22) Date de dépôt: 24.07.2017
(51) Int. Cl.: G06F 3/039, G06F 3/0488, G06F 3/0354

(54) **INTERFACE TACTILE TANGIBLE RECONFIGURABLE**
REKONFIGURIERBARE GREIFBARE BERÜHRUNGSSCHNITTSTELLE
RECONFIGURABLE TANGIBLE TACTILE INTERFACE

(30) Priorité: 12.09.2016 FR 1658456
(43) Date de publication de la demande: 17.07.2019
(73) Titulaire: Joue, 33100 Bordeaux (FR)
(72) Inventeur: JOGUET, Pascal, 33670 Sadirac (FR); ROUSSET, Arnaud, 33100 Bordeaux (FR); MARTIN, Guillaume, 33600 Pessac (FR)
(74) Mandataire: IP Trust
(86) Numéro de dépôt international: PCT/FR2017/052036
(87) Numéro de publication internationale: WO 2018/046810

(56) Documents cités:
- EP-A1- 1 585 295
- US-A1- 2004 056 781
- US-A1- 2006 256 090
- US-A1- 2007 222 765
- US-A1- 2011 248 838
- US-A1- 2013 215 029

## Description

### Domaine de l'invention

La présente invention concerne le domaine des interfaces homme-machine utilisant un capteur tactile. Un tel dispositif sert à interagir avec le matériel informatique par le biais de plusieurs points de contact (souvent avec plusieurs doigts).

### Etat de la technique

Un tel dispositif se compose d'un pavé tactile ou d'une surface tactile opaque ou transparente qui reconnaissent des points de contact simultanés et multiples, ainsi que d'un logiciel qui interprète ces contacts simultanés. Dans le cas d'une surface transparente, la surface tactile est appliquée sur un écran de visualisation.

Le dispositif fournit par l'intermédiaire d'un pilote des signaux numériques correspondant à la position et éventuellement le degré de pression de chaque point de contact de façon indépendante, ce qui permet d'effectuer des gestes et d'interagir avec plusieurs doigts ou avec les mains, et de créer une interaction riche.

Une des technologies projette une image à travers une surface acrylique ou en verre, puis rétro-éclaire l'image avec des LEDs.

Les surfaces tactiles peuvent également être sensibles à la pression par l'ajout d'un revêtement. Ce revêtement réfléchi différemment en fonction de la pression exercée lors de l'appui, ce qui modifie la réflexion.

Les technologies portables utilisent souvent un panneau qui porte une charge électrique (technologie capacitive). Lorsqu'un doigt touche l'écran, le contact perturbe le champ électrique du panneau. La perturbation est enregistrée comme un événement (en informatique) qui peut être envoyé au logiciel, qui initie alors une réponse à l'événement de mouvement.

Une autre technologie repose sur l'utilisation d'un réseau de résistances imprimées en transparence ou non sur des feuilles souples constituant le panneau tactile (par ex du PET). L'application d'une pression physique à la surface du panneau (par un doigt ou tout autre dispositif) vient modifier les composantes électriques de ce dernier. La perturbation est enregistrée comme un événement (en informatique) qui peut être envoyé au logiciel, qui initie alors une réponse à l'événement de mouvement.

Ces dispositifs sont généralement plats et présentent une surface d'interaction plane.

On a aussi proposé d'associer à ces dispositifs des éléments en relief pour fournir des sensations améliorant la perception de l'interaction. Ces éléments en relief peuvent être collés définitivement sur la surface active.

On a aussi proposé des capteurs personnalisables avec des éléments en relief interchangeables.

On connaît dans l'état de la technique la demande de brevet US2006/256090 A1 décrivant un accessoire mécanique pour un dispositif de détection tactile comprenant une base configurée pour le placement sur une surface tactile et un ou plusieurs actionneurs mécaniques. Le mouvement des actionneurs mécaniques est configuré pour provoquer l'activation de la surface tactile du dispositif de détection tactile.

On connaît aussi la demande de brevet US2011/0248838 A1 décrivant une solution consistant à adjoindre un clavier à un écran tactile. Il s'agit également d'une solution figée, nécessitant la fabrication d'un accessoire mécaniquement complexe et non modulaire.

On connaît encore la demande de brevet européen EP1585295 A1 décrit également une solution consistant à adjoindre un clavier à un écran tactile. Il s'agit également d'une solution figée, nécessitant la fabrication d'un accessoire mécaniquement complexe et non modulaire.

### Inconvénients de l'art antérieur

Ces solutions de l'art antérieur ne permettent que des personnalisations limitées du dispositif. Il ne laisse pas une totale liberté à l'utilisateur dans la personnalisation, et par exemple ne permet pas de mélanger différents accessoires pour définir une nouvelle configuration décidée par l'utilisateur.

### Solution apportée par l'invention

Afin de remédier à cet inconvénient, la présente invention concerne un système électronique d'interface homme-machine conforme à la revendication 1.

L'invention concerne une solution permettant de réaliser très facilement des accessoires de personnalisation par moulage d'un matériau déformable élastiquement, par exemple du silicone, contrairement à la solution proposée par US2006/0256090 A1 impliquant la fabrication d'un ensemble mécanique complexe et fragile.

Une variante de la présente invention utilise un capteur tactile souple et non rigide.

Selon une variante, le système comprend un capteur résistif dont la surface permet soit une interaction directe avec le doigt de l'utilisateur, ou avec un stylet, ou une interaction indirecte par l'intermédiaire d'une feuille souple interchangeable présentant des reliefs caractéristiques.

Selon une variante, la mémoire dudit accessoire contient un identifiant de personnalisation spécifique à un type d'accessoire, et le système comporte une mémoire permanente pour l'enregistrement de données de configuration associée audit identifiant de personnalisation, l'étape de configuration consistant à exploiter les données de configuration correspondant à l'identifiant lu lors de l'étape de configuration.

Selon une autre variante, lesdites données de configuration sont paramétrables.

Les accessoires sont constitués par des pièces tridimensionnelles réalisées en un matériau déformable élastiquement et présentant une surface inférieure complémentaire d'une partie au moins du capteur tactile, pour transmettre les efforts exercés sur la surface extérieure de l'accessoire au capteur tactile.

Selon un mode de réalisation particulier, les accessoires sont constitués par des pièces tridimensionnelles présentant une surface inférieure complémentaire d'une partie au moins du capteur tactile et des découpes pour l'accès à la surface du capteur tactile lorsque l'accessoire est déposé sur la surface du capteur tactile.

De préférence, lesdits moyens de communication sont de type radiofréquence, notamment de type RFID.

Selon un mode de réalisation particulier, le système selon l'invention constitue un périphérique présentant un port de communication pour le raccordement à un ordinateur.

### Description détaillée d'un exemple non limitatif de l'invention

L'invention sera mieux comprise à la lecture de la description qui suit, concernant un exemple non limitatif de réalisation illustré par les dessins annexés où :
- la figure 1 représente une vue schématique en coupe d'un équipement selon l'invention
- les figures 2 à 7 représentent diverses configurations d'un accessoire de personnalisation pour un équipement selon l'invention
- les figures 8 et 9 représentent des vues respectivement en coupe et de dessus d'un accessoire hémisphérique.

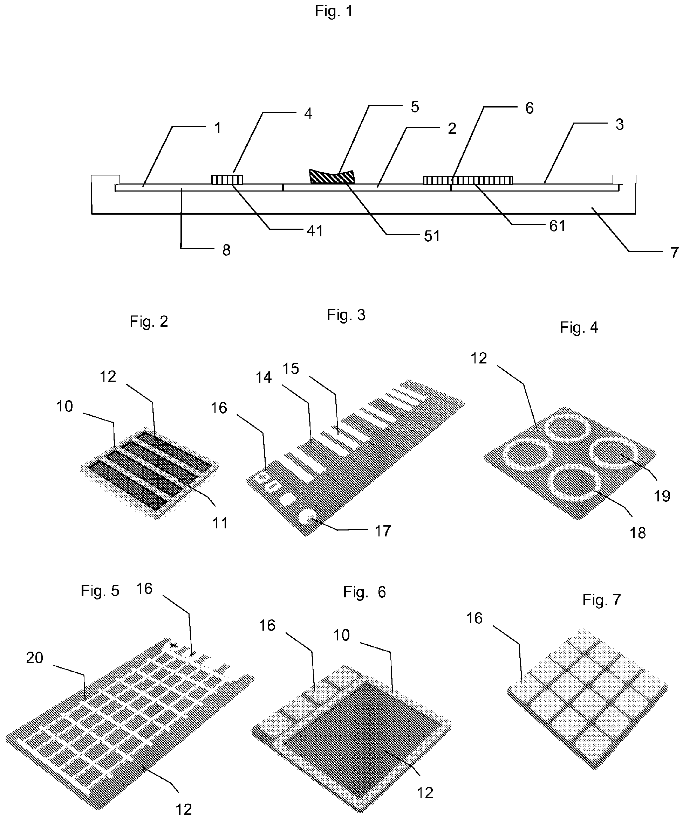

Le dispositif représenté à titre d'exemple sur la figure 1 est un périphérique formé par une base (7) comprenant un pavé tactile multipoints (8) sur lequel sont délimités graphiquement et/ou mécaniquement trois zones tactiles (1 à 3) adjacentes.

Le capteur est par exemple un capteur de déformation tel que décrit dans la demande de brevet internationale WO 2014087164 ou un capteur multipoints tel que décrit dans le brevet européen EP 2399185.

Le pavé tactile (8) peut également être constitué par un pavé capacitif ou résistif transparent, ou un pavé capacitif ou résistif opaque. Il est associé de manière connue à un circuit pilote (driver). Des repères visuels ou des bosselages permettent de subdiviser le pavé tactile (8) en plusieurs zones de réception (1 à 3) permettant de déposer un ou plusieurs accessoires dont les figures 2 à 7 illustrent des exemples.

Cette surface active peut être exploitée de manière habituelle, avec un ou plusieurs doigts ou un stylet.

Elle peut aussi recevoir des accessoires (4 à 6) constitués par un matériau déformable élastiquement, présentant une surface inférieure (41, 51, 61) plane qui peut être recouverte d'un adhésif réversible, ou d'un revêtement magnétique. Les accessoires (4 à 6) peuvent également être formés par une matière souple, par exemple du silicone, chargé avec des poudres métalliques ou magnétiques, pour permettre la fixation magnétique de l'accessoire sur un socle dans lequel sont insérés des aimants permanents.

Dans le cas d'un pavé capacitif, les accessoires (4 à 6) sont constitués en un matériau déformable élastiquement avec des charges conductrices, de moins de deux millimètres d'épaisseur et transparent lorsque le pavé est un écran tactile.

Dans le cas d'une technologie résistive, les accessoires peuvent être plus épais, jusqu'à plusieurs centimètres, découpés dans un matériau souple transmettant les efforts jusqu'à la surface du capteur.

Les accessoires (4 à 6) présentent une épaisseur permettant de transmettre les efforts exercés sur la face supérieure à la surface tactile. L'épaisseur de la surface inférieure est comprise entre 1 et 5 millimètres, notamment de 3 millimètres. Ils sont constitués d'un caoutchouc de silicone transparent lorsqu'ils sont destinés à compléter un écran tactile, ou opaque lorsqu'ils sont destinés à un pavé tactile opaque. Ils sont découpés dans une feuille souple et suivant les configurations complétés avec des éléments en relief rigides ou, selon l'invention, souples. Le maintien sur le pavé tactile est assuré par une liaison magnétique, un adhésif ou tout autre dispositif mécanique connu.

Chaque accessoire incorpore un composant de communication surmoulé, par exemple un module RFID dont la mémoire permanente contient un identifiant numérique du type d'accessoire. Alternativement, le module RFID comprend une mémoire vive permettant la lecture et l'écriture d'information via la base (7).

Chaque accessoire est constitué par un substrat déformable, et peut présenter une ou plusieurs pièces déformables dont la forme et la configuration personnalisent l'accessoire. Ces pièces peuvent être rapportées sur le substrat, ou peuvent être constituées par une déformation locale de l'accessoire pour former des surépaisseurs ou des creux de forme et de configuration variée. L'accessoire peut par exemple être réalisé par moulage d'une résine ou de silicone, ou de PVC souple.

La base (7) présente, au niveau de chacune des zones (1 à 3), une antenne de détection permettant de détecter la présence ou l'absence d'un accessoire, et le cas échéant de lire et/ou écrire dans la mémoire de l'accessoire des données provenant d'un équipement connecté à la base, ou provenant directement de la base équipée d'un calculateur intégré.

Ce composant communique avec un circuit électronique complémentaire assurant la lecture de l'identifiant numérique lorsque l'accessoire est posé sur le pavé tactile (8). Ce circuit commande le paramétrage du pilote de l'équipement afin de le faire correspondre à la configuration physique de l'accessoire. Le circuit électronique peut être intégré dans le socle (7), ou dans un équipement connecté, par exemple un ordinateur ou une tablette ou encore un équipement musical.

Les figures 2 à 7 représentent différents exemples de configurations d'accessoires.

La figure 2 représente un accessoire présentant un cadre rigide (10) formant un relief sur une membrane souple (12) déformable élastiquement. Des cloisons (11) déterminent des zones actives de coulissement du doigt de l'utilisateur.

La figure 3 représente un autre exemple d'accessoire présentant la forme d'un clavier d'instrument à musique, avec des zones (14) d'une première épaisseur et des zones (15) d'une épaisseur légèrement supérieure, correspondant aux touches blanches et noires d'un piano. D'autres zones de relief (16) correspondent à des boutons. Certaines zones de relief (17) présentent une surface supérieure hémisphérique.

En particulier, la pièce hémisphérique (17) déformable permet de détecter des mouvements selon trois axes, dans le plan du pavé tactile (8) selon des directions X,Y et perpendiculairement à ce plan selon un axe Z, en fonction de la pression exercée par le doigt de l'utilisateur et la direction du déplacement après l'exercice d'une pression. Une membrane présentant une telle pièce hémisphérique (17) présente un comportement de type « joystick ».

La figure 4 représente un accessoire formé par une membrane (12) souple portant des anneaux (18) rigides en relief, délimitant des zones d'interaction tactile (19).

La figure 5 représente une variante d'un tel accessoire où la membrane (12) est revêtue par un cadre (20) formant un cloisonnement matriciel.

La figure 6 représente une autre variante d'accessoire où la membrane (12) présente une zone principale délimitée par un cadre rigide (10) en relief, et comporte des boutons (16) en relief protubérant.

La figure 7 représente une autre variante où la membrane est revêtue avec des éléments carrés (16) formant des boutons répartis sur la surface de la membrane.

### Fonctionnement

Le fonctionnement est le suivant :
On connecte l'appareil à l'équipement informatisé (étape facultative si l'appareil est lui-même informatisé) via une interface de communication filaire ou non (USB, bluetooth ou équivalent).

L'appareil émet un signal RFID afin de savoir si des accessoires sont présents ou pas sur sa surface. Cette détection est réalisée par exemple par les boucles disposées sous chacune des zones actives (1 à 3) délimitant le pavé tactile (8).

On pose un ou plusieurs accessoires sur la surface de l'appareil.

Dès qu'un accessoire est posé sur l'appareil, il se déclare auprès de l'appareil via une lecture RFID.

L'appareil récupère la programmation de l'accessoire et mappe les données tactiles du capteur en fonction des paramètres déterminés dans la mémoire RFID de l'accessoire. Ces données sont d'ordre géométrique (dimension de l'accessoire, composition mécanique) mais peuvent aussi être plus complexes (mode de fonctionnement, réponse à des gestes, à des modes d'interaction particuliers, temps de réponse, courbe de sensibilité à la pression...). Sont aussi décrites les informations concernant le type de messages à envoyer lors d'une interaction avec l'accessoire.

A titre d'exemple, la mémoire RFID présente une capacité de mémoire de 800 octets, pour l'enregistrement d'une séquence de personnalisation d'un accessoire, avec une structure telle que :
- entête (header) déterminant le type de l'accessoire (par exemple clavier de piano, matrices de boutons, corde de guitare). Chacun de ces types est associé à un code numérique. Cet entête peut aussi comporter un code correspondant à la couleur de l'accessoire, pour permettre une restitution graphique fidèle de l'accessoire sur un écran de visualisation d'un équipement complémentaire. Cet entête peut également comporter un code numérique correspondant au nombre de couches de sensibilité verticale (par exemple 0 pour une zone fonctionnant en « tout ou rien », 1 pour une zone présentant un seuil intermédiaire, etc...). L'entête comprend aussi un code numérique indiquant le nombre et le type de pièces déformables présentes sur l'accessoire.
- pour chacune des pièces déformables, la structure comporte une séquence numérique correspondant à :
- la localisation géométrique de la pièce par rapport à l'accessoire
- la fonction associée à l'activation de la pièce déformable, sous forme de code permettant l'appel d'une fonction informatique disponible sur un équipement connecté
- éventuellement un code numérique appelant l'exécution d'un script disponible sur un équipement connecté, par exemple le changement d'octave lors de l'action sur la pièce déformable correspondante.

La mémoire intégrée dans l'accessoire est une mémoire vive permettant la lecture par la base comprenant le capteur tactile, pour configurer l'équipement connecté et permettant également l'enregistrement dans la mémoire de l'accessoire d'une modification de la configuration déterminée à partir de l'équipement connecté.

Lors de la fabrication de l'accessoire, on enregistre dans la mémoire une configuration par défaut. Lors de l'utilisation d'un accessoire sur une autre base, le comportement de l'équipement connecté restera le même.

Il est ainsi possible d'échanger physiquement, entre utilisateurs, des accessoires déformables qui « embarquent » leur mode de fonctionnement. Il est également possible d'enrichir les fonctionnalités à partir d'un équipement connecté, localement ou par accès à un serveur comportant une bibliothèque de fonctionnalités adressables par les accessoires déformables.

Lorsque l'utilisateur interagit avec un accessoire, les données prévues dans la configuration de cet accessoire sont envoyées par l'appareil à l'équipement informatisé.

Quand un accessoire est retiré de l'appareil, ce dernier cesse d'émettre les messages correspondants.

Une étape de programmation des accessoires est possible via un logiciel dédié. Ce logiciel permet de modifier le comportement d'un accessoire ainsi que le type des données que l'appareil devra transmettre à l'équipement informatisé.

Lorsque l'utilisateur a terminé de configurer l'accessoire, l'appareil stocke la nouvelle configuration dans la mémoire interne de l'accessoire.

L'accessoire peut alors être utilisé sur l'appareil en question avec ses nouveaux paramètres de configuration.

L'invention transforme un capteur tactile sans relief en un appareil tangible modulaire.

L'interface homme-machine ainsi créée est totalement modulaire. Avec un même appareil, il est possible d'étendre à l'infini les possibilités d'interaction en développant autant d'accessoires que nécessaire ayant chacun ses propres paramètres de configuration et de modes d'interaction.

Les accessoires une fois programmés peuvent être échangés entre plusieurs utilisateurs, et ces accessoires seront immédiatement reconnus et compatibles avec l'appareil d'un nouvel utilisateur. De ce fait, une communauté d'utilisateurs se crée, ils échangent les meilleures configurations d'accessoires pour un usage donné.

Les accessoires peuvent être placés et enlevés de l'appareil en temps réel ce qui permet de faire évoluer l'interface homme-machine en cours d'utilisation. L'utilisateur peur ainsi faire évoluer les modes d'interaction avec l'équipement informatisé en fonction de son besoin.

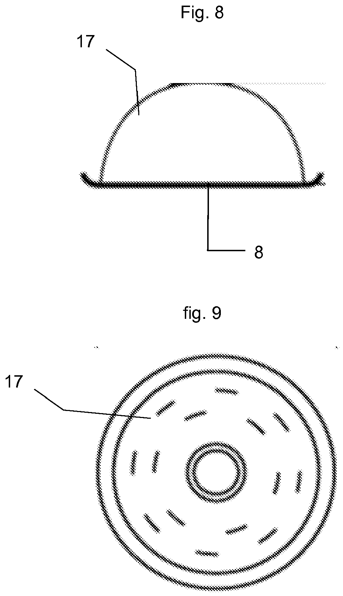

Les figures 8 et 9 représentent des vues respectivement en coupe et de dessus d'un accessoire hémisphérique. L'invention peut aussi se rapporter à une pièce hémisphérique déformable élastiquement, montée directement ou de manière réversible, sur une surface tactile.

La pièce (17) présente la forme d'un dôme présentant une section comprise entre 5 et 20 millimètres. Il est réalisé par moulage de silicone avec une dureté Shore comprise entre 10 et 40. Elle peut être collée sur une surface tactile. L'application d'une pression sur le dôme provoque une modification de l'état de la surface tactile. Par ailleurs, la modification de l'axe de la pression est détectée par la surface tactile sous forme de déplacement du barycentre de la pression détectée, ce qui fournit une information en X, Y dans le plan de la surface tactile, en sus de l'information selon la direction perpendiculaire Z, fonction de l'intensité de la pression.

## Revendications

1. Système électronique d'interface homme-machine comprenant un capteur tactile (8), un pilote dudit capteur tactile, un circuit électronique d'appairage relié audit pilote et au moins un accessoire (4 à 6) amovible de personnalisation dudit capteur tactile (8), ledit accessoire (4 à 6) amovible comprenant une mémoire électronique et des moyens de communication à distance avec ledit circuit électronique d'appairage, le système comprenant des moyens pour détecter la présence dudit accessoire amovible (4 à 6) sur la surface du capteur tactile et pour initier une étape de configuration des signaux délivrés par ledit pilote en fonction des informations enregistrées dans ladite mémoire de l'accessoire détecté et lues par ledit circuit électronique d'appairage,
**caractérisé en ce que** ledit accessoire (4 à 6) est constitué par une pièce tridimensionnelle qui est formée par une feuille souple interchangeable présentant des reliefs caractéristiqueset est réalisée en un matériau déformable élastiquement et présentant une surface inférieure d'une épaisseur comprise entre 1 et 5 millimètres et complémentaire d'une partie au moins du capteur tactile (8), pour transmettre les efforts exercés sur la surface extérieure de l'accessoire (4 à 6) au capteur tactile (8).

2. Système électronique d'interface homme-machine selon la revendication 1 **caractérisé en ce que** la mémoire dudit accessoire contient un identifiant de personnalisation spécifique à un type d'accessoire, et **en ce que** le système comporte une mémoire permanente pour l'enregistrement de données de configuration associée audit identifiant de personnalisation, l'étape de configuration consistant à exploiter les données de configuration correspondant à l'identifiant lu lors de l'étape de configuration.

3. Système électronique d'interface homme-machine selon la revendication 2 **caractérisé en ce que** lesdites données de configuration sont paramétrables.

4. Système électronique d'interface homme-machine selon la revendication 1 **caractérisé en ce que** la pièce tridimensionnelle présente en outre des découpes pour l'accès à la surface du capteur tactile lorsque l'accessoire est déposé sur la surface du capteur tactile.

5. Système électronique d'interface homme-machine selon la revendication 1 **caractérisé en ce que** lesdits moyens de communication sont de type radiofréquence.

6. Système électronique d'interface homme-machine selon la revendication 1 **caractérisé en ce que** les reliefs caractéristiques comprennent une pièce (17) présentant une surface supérieure de forme hémisphérique.

7. Système électronique d'interface homme-machine selon la revendication 1 **caractérisé en ce qu'**il constitue un périphérique présentant un port de communication pour le raccordement à un ordinateur.

8. Système électronique d'interface homme-machine selon la revendication 1 **caractérisé en ce que** ledit accessoire est formé par une matière souple chargée avec des poudres métalliques ou magnétiques, pour permettre la fixation magnétique de l'accessoire sur un socle dans lequel sont insérés des aimants permanents.

## Patentansprüche

1. Elektronisches Mensch-Maschine-Schnittstellensystem mit einem taktilem Sensor (8), einem Treiber für den taktilen Sensor, einer elektronischen Paarungsschaltung, die mit dem Treiber verbunden ist, und mindestens einem abnehmbaren Zubehör (4 bis 6) zur Personalisierung des taktilen Sensors (8), wobei das abnehmbare Zubehör (4 bis 6) einen elektronischen Speicher und Mittel zur Fernkommunikation mit der elektronischen Paarungsschaltung umfasst > wobei das System Mittel zur Erkennung der Präsenz des abnehmbaren Zubehörs (4 bis 6) auf der Oberfläche des taktilen Sensors und zur Einleitung eines Schritts der Konfiguration der Signale umfasst, die der Treiber entsprechend den im Speicher des erkannten Zubehörs gespeicherten und von der elektronischen Paarungsschaltung gelesenen Informationen liefert, **dadurch gekennzeichnet, dass** das Zubehör (4 bis 6) aus einem dreidimensionalen Teil besteht, das durch eine austauschbare Weichfolie mit charakteristischen Reliefs besteht, aus einem elastisch verformbaren Material hergestellt ist und eine Unterseite mit einer Dicke zwischen 1 und 5 mm aufweist, die zumindest zu einem Teil des taktilen Sensors (8) komplementär ist, um die auf die Außenfläche des Zubehörs (4 bis 6) ausgeübten Kräfte auf den taktilen Sensor (8) zu übertragen.

2. Elektronisches Mensch-Maschine-Schnittstellensystem nach Anspruch 1, **dadurch gekennzeichnet, dass** der Speicher des Zubehörs eine für einen Zubehörtyp spezifische Personalisierungskennung enthält und das System einen permanenten Speicher zur Speicherung von Konfigurationsdaten umfasst, der der Personalisierungskennung zugeordnet sind, wobei der Konfigurationsschritt darin besteht, die Konfigurationsdaten zu verwenden, die der im Konfigurationsschritt gelesenen Kennung entsprechen.

3. Elektronisches Mensch-Maschine-Schnittstellensystem nach Anspruch 2, **dadurch gekennzeichnet, dass** die genannten Konfigurationsdaten parametrierbar sind.

4. Elektronisches Mensch-Maschine-Schnittstellensystem nach Anspruch 1, **dadurch gekennzeichnet, dass** das dreidimensionale Teil des Weiteren Aussparungen aufweist, um Zugang zur Oberfläche des taktilen Sensors zu haben, wenn das Zubehör auf die Oberfläche des taktilen Sensors aufgelegt wird.

5. Elektronisches Mensch-Maschine-Schnittstellensystem nach Anspruch 1, **dadurch gekennzeichnet, dass** die Kommunikationsmittel Funkfrequenzkommunikationsmittel sind.

6. Elektronisches Mensch-Maschine-Schnittstellensystem nach Anspruch 1, **dadurch gekennzeichnet, dass** die charakteristischen Reliefs ein Teil (17) umfassen, das eine halbkugelförmige Oberseite aufweist.

7. Elektronisches Mensch-Maschine-Schnittstellensystem nach Anspruch 1, **dadurch gekennzeichnet, dass** es ein Peripheriegerät mit einem Kommunikationsanschluss zum Anschließen an einen Computer bildet.

8. Elektronisches Mensch-Maschine-Schnittstellensystem nach Anspruch 1, **dadurch gekennzeichnet, dass** das Zubehör aus einem flexiblen Material besteht, dem metallische oder magnetische Pulver hinzugegeben wurden, um die magnetische Befestigung des Zubehörs auf einem Sockel zu ermöglichen, in den Dauermagnete eingefügt sind.

## Claims

1. An electronic man-machine interface system comprising a touch sensor (8), a driver for said touch sensor, an electronic pairing circuit connected to said driver and at least one removable accessory (4 to 6) for customising said touch sensor (8), said removable accessory (4 to 6) comprising an electronic memory and means for remote communication with said electronic pairing circuit, the system comprising means for detecting the presence of said removable accessory (4 to 6) on the surface of the touch sensor and for initiating a step of configuration of the signals delivered said driver depending on the information recorded in said memory of the detected accessory and read by said electronic pairing circuit, **characterised in that** said accessory (4 to 6) is constituted by a three-dimensional part which is formed by an interchangeable flexible sheet having characteristic reliefs and is made of an elastically deformable material and having a lower surface with a thickness of between 1 and 5 millimetres and complementary to at least part of the tactile sensor (8), for transmitting the forces exerted on the outer surface of the accessory (4 to 6) to the tactile sensor (8) .

2. An electronic man-machine interface system according to claim 1, **characterised in that** the memory of said accessory contains a personalization identifier specific to a type of accessory, and **in that** the system comprises a permanent memory for recording configuration data associated with said personalization identifier, the configuration step consisting in exploiting the configuration data corresponding to the identifier read during the configuration step.

3. An electronic man-machine interface system according to claim 2, **characterised in that** said configuration data are parameterizable.

4. An electronic human-machine interface system according to claim 1, **characterised in that** the three-dimensional part furthermore has cutouts for access to the surface of the touch sensor when the accessory is placed on the surface of the touch sensor.

5. An electronic man-machine interface system according to claim 1, **characterised in that** said communication means are of the radiofrequency type.

6. Electronic man-machine interface system according to claim 1, **characterised in that** the characteristic reliefs comprise a part (17) having a hemispherical upper surface.

7. An electronic man-machine interface system according to claim 1, **characterised in that** it constitutes a peripheral device having a communication port to be connected to a computer.

8. An electronic man-machine interface system according to claim 1, **characterised in that** said accessory is formed by a flexible material charged with metallic or magnetic powders, to allow the magnetic fixing of the accessory on a base in which permanent magnets are inserted.
